# EUROPÄISCHE PATENTSCHRIFT

(11) **EP 1 153 773 B1**
(45) Veröffentlichungstag und Bekanntmachung des Hinweises auf die Patenterteilung: **06.02.2008**
(21) Anmeldenummer: 01105075.4
(22) Anmeldetag: 02.03.2001
(51) Int. Cl.: B60G 17/015

(54) **Verfahren zum Verhindern des Umkippens eines luftgefederten Fahrzeugs auf schräger Fahrbahn**
Method for preventing the overturning of an air sprung vehicle on an inclined roadway
Méthode pour empêcher le retournement d'un véhicule muni de ressorts à air sur une route inclinée

(30) Priorität: 10.05.2000 DE 10022834
(43) Veröffentlichungstag der Anmeldung: 14.11.2001
(73) Patentinhaber: WABCO GmbH, 30453 Hannover (DE)
(72) Erfinder: Becher, Hans-Otto, Dr., 30177 Hannover (DE)
(74) Vertreter: Schrödter, Manfred

(56) Entgegenhaltungen:
- EP-A- 0 332 827
- EP-A- 0 960 800
- DE-A- 4 342 732
- DE-A- 19 735 912
- PATENT ABSTRACTS OF JAPAN vol. 1999, no. 03, 31. März 1999 (1999-03-31) & JP 10 338016 A (UESUGI TAKASHI), 22. Dezember 1998 (1998-12-22)
- PATENT ABSTRACTS OF JAPAN vol. 009, no. 294 (M-431), 20. November 1985 (1985-11-20) & JP 60 131308 A (NIPPON DENSO KK), 13. Juli 1985 (1985-07-13)
- PATENT ABSTRACTS OF JAPAN vol. 012, no. 142 (M-692), 30. April 1988 (1988-04-30) & JP 62 265010 A (MITSUBISHI MOTORS CORP), 17. November 1987 (1987-11-17)

## Beschreibung

Die Erfindung bezieht sich auf ein Verfahren zum Verhindern des Umkippens eines luftgefederten Fahrzeugs gemäß dem Oberbegriff des Patentanspruchs 1.

Bei luftgefederten Fahrzeugen, insbesondere Nutzfahrzeugen, sind zwischen den Achsen und dem Fahrzeugaufbau bzw. der Karosserie Luftfederbälge angeordnet, die von einer im Fahrzeug enthaltenen Druckluft-Erzeugungsanlage aufgepumpt werden können. Durch geeignete Ventile kann ebenfalls Druckluft abgelassen oder gehalten werden und so eine konstante Höhe der Federbälge eingestellt werden.

Bekannt sind weiter elektronisch gesteuerte Niveauregulierungen für luftgefederte Fahrzeuge. Diese sind einsetzbar in Lkw mit luftgefederten Hinter- oder Vorderachsen, in luftgefederten Bussen und in luftgefederten Anhängerfahrzeugen. Ein Fahrzeug mit einer derartigen elektronischen Niveauregulierung gemäß der Gattung des Patentanspruchs 1 ist beispielsweise bekannt aus dem WABCO-Prospekt "ECAS-Elektronische Niveauregulierung für luftgefederte Nutzkraftwagen" vom Februar 1996. Die grundsätzlichen Aufgaben derartiger Niveauregulierungen sind die Einstellung eines straßenparallen Fahrzeugaufbaus bei vorgegebenem Niveau auch bei ungleichmäßiger Beladung, eine konstante Niveaulage bei Laderampenbetrieb ohne manuelle Nachregelung, und eine Traktionssteuerung durch optimale Ausnutzung zulässiger Achslasten.

Bei Nutzfahrzeugen, insbesondere Bussen, ist die Gefahr des seitlichen Umkippens auf schräger Fahrbahn unterschiedlich ausgeprägt. So haben z. B. Niederflurbusse, die überwiegend im Stadtverkehr eingesetzt werden, wegen der tiefen Schwerpunktlage eine geringere Neigung zum Umkippen als Überlandbusse mit höherer Schwerpunktlage. Die größte Gefahr besteht bei Bussen mit besonders hohem Schwerpunkt, beispielsweise bei Doppeldeckerbussen. Hier wäre insbesondere auch der Fall zu berücksichtigen, daß nur das obere Deck besetzt ist. Dies kann in besonderen Fällen, beispielsweise Ausflugs- und Besichtigungsfahrten wegen der besseren Sicht vom oberen Deck durchaus der Fall sein.

Eine weitere Gefahr des Umkippens von Bussen besteht während der Durchführung eines sogenannten Tilt-Testes. Ein solcher Test ist in einigen Ländern, beispielsweise in England, gesetzlich vorgeschrieben. Während eines derartigen Testes wird das zu testende Fahrzeug auf eine Rampe gestellt, die langsam seitlich in eine Schräglage von maximal 35° geneigt wird. Der Tilt-Test ist bestanden, wenn das Fahrzeug in dieser Stellung nicht umkippt. Damit das Fahrzeug nicht beschädigt wird, falls es den Test nicht besteht, ist es mit Gurten gegen vollständiges Umkippen gesichert.

Eine andere Art der Umkippgefahr besteht, wenn das Fahrzeug auf einem Schiff, beispielsweise einer Fähre steht und diese infolge eines Defekts in eine übermäßige Schräglage (Schlagseite) gerät.

Eine weitere Möglichkeit einer unzulässigen Schräglage eines Busses besteht dann, wenn sich sämtliche Fahrgäste auf eine Seite begeben, beispielsweise um eine dort liegende Sehenswürdigkeit zu beobachten.

Zur Erfassung derartiger unzulässiger Neigungen verwenden einige Hersteller spezielle Tilt-Sensoren, welche in der Lage sind, den absoluten Wankwinkel des Fahrzeugs, d. h. den Winkel der Fahrzeug-Karosserie gegen die Waagerechte zu erfassen. Ein derartiges Verfahren ist aus DE 197 35 912 A2 bekannt. Sobald dieser Wankwinkel einen festgelegten Schwellwert überschritten hat, werden dann Gegenmaßnahmen, die das Fahrzeug stabilisieren sollen, eingeleitet. Eine solche Gegenmaßnahme kann z. B. im Entlüften aller Luftfederbälge bestehen, wodurch das Chassis auf die in den Luftfedern enthaltenen Puffer abgesenkt wird. Ein derartiger zusätzlicher Tilt-Sensor ist jedoch technisch aufwendig und bedeutet gesteigerte Kosten.

Der Erfindung liegt die Aufgabe zugrunde, ein Verfahren zum Verhindern des Umkippens eines luftgefederten Fahrzeugs auf schräger Fahrbahn anzugeben, welches ohne den oben erwähnten Tilt-Sensor auskommt.

Diese Aufgabe wird durch die im Patentanspruch 1 enthaltene Erfindung gelöst. Die Unteransprüche enthalten zweckmäßige Ausgestaltungen.

Die Erfindung wird im folgenden anhand einer Zeichnung näher erläutert. Dabei zeigt
- Fig. 1: ein schematisches Blockschaltbild eines luftgefederten Fahrzeuges mit einer Niveauregulierung
- Fig. 2: ein Flußdiagramm zur Erläuterung des erfindungsgemäßen Regelverfahrens.
- Fig. 3: ein Fahrzeug (Bus) während eines Tilt-Testes
- Fig. 4: ein Diagram der Winkel α und β aus Fig. 2 über der Zeit t

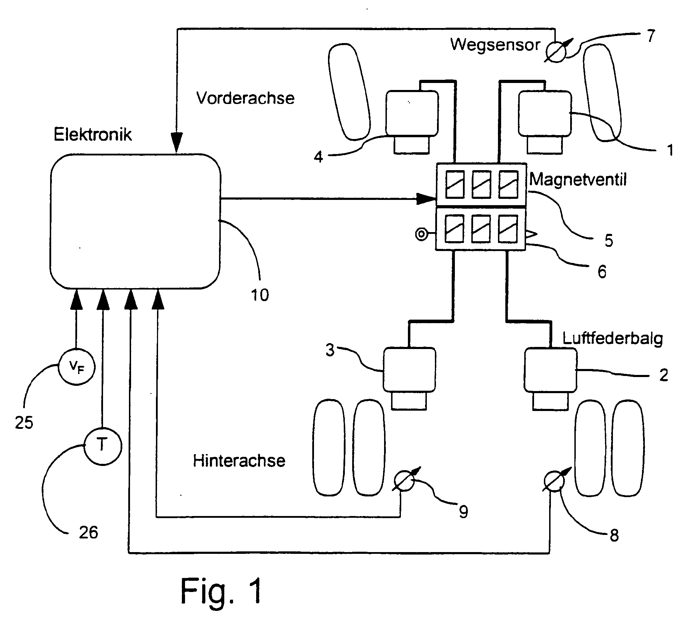

In der Fig. 1 ist schematisch die Pneumatik und Elektronik eines zweiachsigen Fahrzeugs mit einer üblichen Niveauregulierungseinrichtung dargestellt, dessen Aufbau (Chassis) sich auf vier Luftfederbälgen (1, 2, 3, 4) abstützt. Die Abstände zwischen den Fahrzeugachsen und dem Aufbau sind hier mittels dreier Wegsensoren (7, 8, 9) erfaßbar. Für die Vorderachse ist nur ein gemeinsamer Wegsensor (7) vorgesehen. Die von den Wegsensoren gemessenen Abstände bzw. Federwege sind einer Elektronik (10) zugeführt.

Sollten die erfaßten Abstände von einem eingespeicherten Normalwert abweichen, so veranlaßt die Elektronik (10) über Magnetventile (5, 6) ein Belüften bzw. Entlüften der Luftfederbälge (1 - 4) solange, bis der Normabstand wiederhergestellt ist. Dabei sind die Luftfederbälge (1, 4) der Vorderachse über ein gemeinsames Magnetventil (5) nur gemeinsam zu be- oder entlüften, während die Luftfederbälge (2, 3) der Hinterachse über das Magnetventil (6) seitenweise getrennt zu be- oder entlüften sind.

Zur Erfassung der Fahrzeuggeschwindigkeit V_{F} ist weiter ein Sensor (25) vorgesehen. Ein weiterer Sensor (26) dient zur Erfassung des Türzustandes (T) (offen oder geschlossen), insbesondere bei Bussen. Die beiden Meßwerte werden ebenfalls der Elektronik (10) zugeleitet. Es ist auch möglich, daß Fahrzeuggeschwindigkeit und Türzustände von anderen im Fahrzeug befindlichen Elektroniken, wie Antiblockiersystem und Türsteuerung, bereits erfaßt werden und der Elektronik (10) über eine Bus-Verbindung mitgeteilt werden.

Durch die in Fig. 1 dargestellte Niveauregulierungsanlage kann sowohl eine Lageabweichung um die Querachse als auch um die Längsachse des Fahrzeugs ausreguliert werden. Dabei wird beispielsweise ein abgesenktes Heck infolge einer starken Beladung des Fahrzeugs durch gleichmäßiges Belüften der Federbälge (2, 3) der Hinterachse wieder ausgeglichen. Eine Neigung um die Längsachse, beispielsweise infolge einer ungleichmäßigen Ladung, die sich hauptsächlich auf der rechten Seite befindet, wird durch einseitige Erhöhung des Druckes im rechten hinteren Luftfederbalg (2) ausgeglichen.

Es sind auch andersartige Niveauregulierungs-Anlagen, bei denen beispielsweise auch die Luftfederbälge der Vorderachse einzeln reguliert werden können, bekannt.

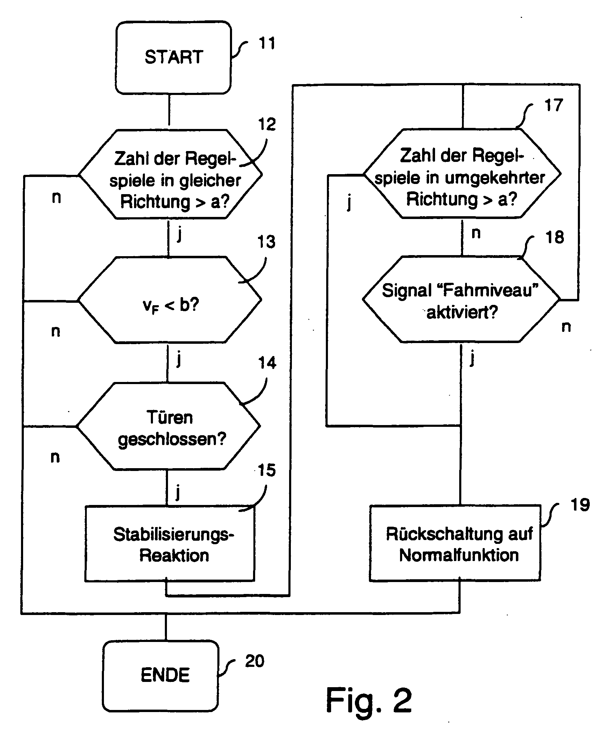

Die Fig. 2 zeigt zur Erläuterung des erfindungsgemäßen Regelverfahrens ein schematisches Flußdiagramm, nach welchem die Elektronik (10) aus der Fig. 1 zusätzlich zur normalen Niveauregulierungs-Funktion programmiert ist. Nach einem Startschritt (11) wird in einem Verzweigungsblock (12) zunächst geprüft, ob die Zahl der Regelspiele in einer Richtung der Niveauregulierung größer ist als eine festgelegte Zahl (a). Hierzu ist anzumerken, daß übliche Niveauregulierungen erkannte Schräglagen eines Fahrzeugs nicht kontinuierlich, sondern in Schritten ausregeln. Falls sich beispielsweise ein Fahrzeug langsam ständig zur Seite neigt, wird dies von der Elektronik (10) nicht kontinuierlich ausgeregelt, sondern es erfolgt zunächst eine erste Ausregelung, anschließend wird dieser Druck der Luftfederbälge gehalten, bis die Schräglage sich wiederum soweit vergrößert hat, daß ein zweiter Regelschritt fällig ist. Dieses Verhalten ist deshalb gewählt worden, um durch die so enthaltene Hysterese Druckluft einzusparen und die zur Regelung verwendeten Magnetventile zu schonen. Die Anzahl derartiger Regelspiele in einer Richtung wird von der Elektronik (10) also gezählt und mit einer Zahl (a) verglichen.

In der Praxis beträgt die Zahl (a) der Regelspiele in gleicher Richtung, nach deren Erreichen auf eine Notsituation oder auf das Vorliegen eines Tilt-Testes geschlossen wird, etwa 3.

Alternativ können auch die Ausregelzeiten der einzelnen Ausregelungs-Schritte in einer Richtung addiert werden und geprüft werden, ob insgesamt eine vorgegebene Zeitspanne (t) überschritten wird.

In einem nachfolgenden Verzweigungsblock (13) wird sodann geprüft, ob die Fahrzeuggeschwindigkeit v_{F} kleiner ist als ein Grenzwert b. Diese Bedingung wurde deshalb eingefügt, weil die Aktivierung der erfindungsgemäßen Stabilisierungs-Reaktion nur erwünscht ist, wenn das Fahrzeug steht oder sich nur sehr langsam bewegt. Eine Aktivierung bei normaler Fahrt ist dagegen nicht erwünscht, da sich dann, wenn die Straße wieder eben wird, eine plötzliche Schieflage des Fahrzeugs ergeben könnte.

Wahlweise wird in einem weiteren Verzweigungsblock (14) geprüft, ob die Türen des Fahrzeugs (Busses) geschlossen sind. Falls das nicht der Fall sein sollte, ist ebenfalls keine Stabilisierungs-Reaktion erwünscht, da sich ein Bus bei einem Einsteigevorgang von vielen Fahrgästen normalerweise zur Seite neigt. Dies wird noch verstärkt bei Bussen mit sogenannter Kneeling-Funktion, um das Einsteigen durch die abgesenkte Stufe zu erleichtern. Da der Bus nach dem Einsteigen der Fahrgäste mit normalem Niveau anfahren soll, wird also dann die Stabilisierungs-Reaktion ausgeschlossen.

Falls die obengenannten Abfragen mit "Nein" beantwortet werden, geht das Programm zum Block (20) "Ende".

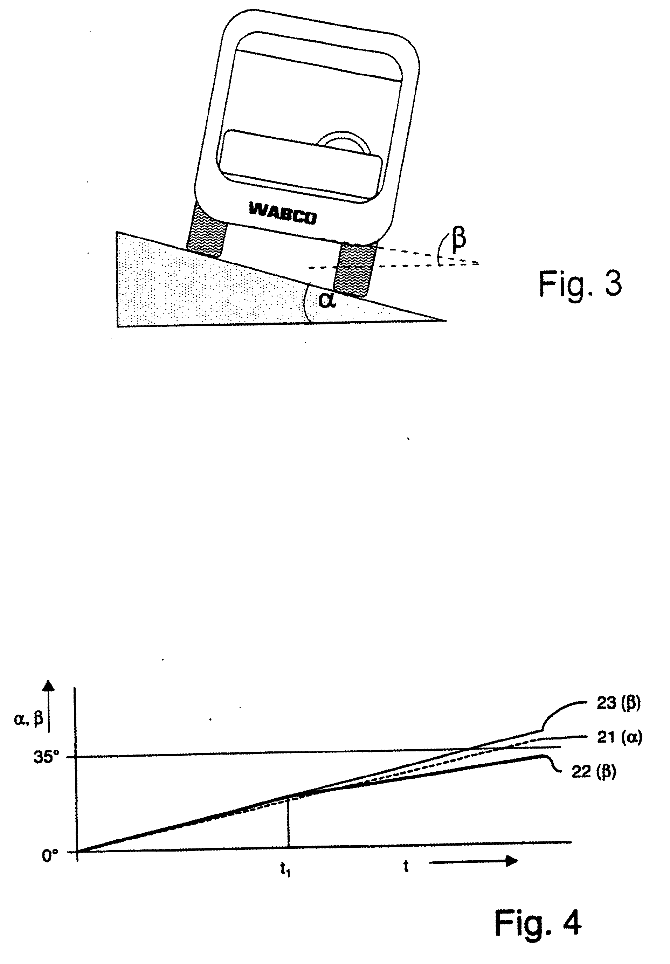

Falls die obengenannten Abfragen (12, 13) und wahlweise (14) jedoch mit "Ja" beantwortet werden, wird in einem Block (15) eine Stabilisierungs-Reaktion durch die Elektronik (10) der Niveau-Regulierungseinrichtung eingeleitet. Diese besteht erfindungsgemäß darin, daß
entweder alle Luftfederbälge (1 bis 4) entlüftet werden und damit die Karosserie auf die in den Luftfederbälgen enthaltenen Gummipuffer abgesetzt wird,
oder es erfolgt ein seitenweises Entlüften nur der höher gelegenen Luftfederbälge (vergl. Fig. 3),
oder es erfolgt ein seitenweises Belüften nur der tiefer gelegenen Luftfederbälge,
oder es werden gleichzeitig oder alternierend die höher gelegenen Luftfederbälge entlüftet und die tiefer gelegenen Luftfederbälge belüftet.

Im Anschluß an die Stabilisierungs-Reaktion (15) wird in einem Verzweigungsblock (17) geprüft, ob der Zustand "schräge Fahrbahn" inzwischen beendet wird. Sollte dies der Fall sein, wird in einem Block (19) auf die normale Niveauregulierungsfunktion zurückgeschaltet.

Anschließend wird das Programm mit einem Block (20) beendet.

Die Beendigung des Zustands "schräge Fahrbahn" wird dadurch erkannt, daß die Einrichtung (5 bis 10) zur Niveauregulierung über eine vorgegebene Zeitspanne (t) oder über eine vorgegebene Zahl (a) von Regelspielen in umgekehrter Richtung arbeitet. Dabei können die Werte von (a) und (t) gleich oder auch verschieden von den oben angeführten Werten sein.

Sollte dies nicht der Fall sein, wird in einem weiteren Verzweigungsblock (18) geprüft, ob ein Signal "Fahrniveau aktiviert" in der Elektronik (10) ansteht. Dieses wird intern dann erzeugt, wenn der Fahrer eine dafür vorgesehene Taste betätigt oder die Fahrgeschwindigkeit einen bestimmten Wert überschreitet.

Sollte das obgengenannte Signal nicht anstehen, wird in einer Schleife wieder der Block (17) angesteuert. Anderenfalls wird in dem Block (19) auf Normalfunktion zurückgeschaltet, und das Programm mit dem Block (20) beendet.

In der Fig. 3 ist ein Fahrzeug während des bereits oben erwähnten Tilt-Testes schematisch dargestellt.

Gezeichnet ist die Frontansicht des Fahrzeugs (Bus), das auf einer schrägen Ebene (Prüfstand) steht, deren Neigungswinkel α während des Tests gegenüber der Waagerechten von Null bis zu einem Endwert kontinuierlich erhöht wird. Das Fahrzeug ist mit der Niveauregulierungseinrichtung aus der Fig. 1 ausgerüstet. Der Tilt-Test ist bestanden, wenn das Fahrzeug bis zum Schluß, wobei der Winkel α etwa 35° beträgt, nicht umkippt. Der Winkel β beschreibt dabei die Lage der Fahrzeugkarosserie gegenüber der Waagerechten.

In der Fig. 4 sind die Werte der Winkel α, β über der Zeit t während des Tilt-Testes aufgetragen. Am Anfang des Testes sind beide Winkel Null. Im Verlauf des Testes erhöht sich der Winkel α, d. h. die Schräglage der Fahrbahn bzw. des Prüfstandes, gleichmäßig bis auf etwa 35° (Linie 21).

Bei einem Fahrzeug, das mit einer Niveauregulierung ohne das erfindungsgemäße Verfahren ausgerüstet ist, erhöht sich dabei der Winkel β, also die Neigung der Karosserie gegenüber der Waagerechten bis auf Werte, die möglicherweise zum Umkippen des Fahrzeugs führen können (Linie 23). Der Winkel β wird dabei größer als der Winkel α, auch bedingt durch die Reifeneindrückung.

Bei einem Fahrzeug, das mit dem erfindungsgemäßen Verfahren ausgerüstet ist (Linie 22), erhöht sich zunächst der Winkel β in gleicher Weise wie bei dem oben beschriebenen Fahrzeug ohne das erfindungsgemäße Verfahren (Linie 23). Dies gilt jedoch nur bis zum Zeitpunkt t1, in welchem nach Vorliegen der Bedingungen (12, 13, 14) die Stabilisierungs-Reaktion (15) einsetzt. Hierdurch wird das Fahrzeug in entgegengesetzter Richtung geneigt, wodurch sich der in der Fig. 3 dargestellte Zustand einstellt, bei welchem die Fahrzeugneigung geringer ist als die Neigung des Untergrundes, d. h. β ist kleiner als α. Hierdurch wird ein Umkippen des Fahrzeuges mit Sicherheit verhindert.

Das erfindungsgemäße Verfahren hat den großen Vorteil, daß ein besonderer Tilt-Sensor zum Erkennen der Schräglage nicht erforderlich ist, wodurch die Niveauregulierung gemäß Fig. 1 kostengünstiger als bekannt ausfällt.

## Patentansprüche

1. Verfahren zum Verhindern des Umkippens eines luftgefederten Fahrzeugs mit Luftfederbälgen (1 bis 4) auf schräger Fahrbahn mit folgenden Merkmalen:
a) das Fahrzeug ist mit einer Einrichtung (5 bis 10) zur Niveauregulierung ausgerüstet, die aus Magnetventilen (5, 6), Wegsensoren (7, 8, 9) und einer Elektronik (10) besteht,
**gekennzeichnet durch** folgende Merkmale:
b) es wird von der Elektronik (10) geprüft, ob die Einrichtung (5 bis 10) zur Niveauregulierung über eine vorgegebene Zeitspanne (t) oder über eine vorgegebene Zahl (a) von Regelspielen in derselben Richtung arbeitet,
c) es wird weiter geprüft, ob die Fahrzeuggeschwindigkeit (V_{F}) einen Grenzwert (b) unterschreitet,
d) falls die o. g. Bedingungen erfüllt sind, reagiert die Einrichtung (5 bis 10) zur Niveauregulierung mit dem Entlüften aller Luftfederbälge (1 bis 4),
oder mit dem seitenweisen Entlüften nur der höher gelegenen Luftfederbälge,
oder mit dem seitenweisen Belüften nur der tiefer gelegenen Luftfederbälge,
oder mit dem seitenweisen Entlüften der höher gelegenen Luftfederbälge und gleichzeitig oder alternierend mit dem seitenweisen Belüften nur der tiefer gelegenen Luftfederbälge.

2. Verfahren nach Anspruch 1, **dadurch gekennzeichnet, daß** vor der Reaktion der Einrichtung (5 bis 10) zur Niveauregulierung zusätzlich geprüft wird, ob die Fahrzeugtüren (T) geschlossen sind.

3. Verfahren nach Anspruch 1, **dadurch gekennzeichnet, daß** die Elektronik (10) eine Beendigung des Zustands "schräge Fahrbahn" dann erkennt, wenn die Einrichtung (5 bis 10) zur Niveauregulierung über eine vorgegebene Zeitspanne (t) oder über eine vorgegebene Zahl (a) von Regelspielen in umgekehrter Richtung arbeitet.

4. Verfahren nach Anspruch 3, **dadurch gekennzeichnet, daß** nach dem Erkennen einer Beendigung des Zustandes "schräge Fahrbahn" die normale Niveauregulierungs-Funktion zum Ausregeln des Fahrniveaus wiederhergestellt wird.

## Claims

1. Method of preventing an air-suspended vehicle having air suspension bellows (1 to 4) from overturning on a sloping roadway, having the following features:
a) the vehicle is equipped with a device (5 to 10) for level regulation which consists of solenoid valves (5, 6), displacement sensors (7, 8, 9) and an electronics unit (10),
**characterized by the following features:**
b) a test is carried out by the electronics unit (10) as to whether the device (5 to 10) for level regulation is operating in the same direction over a preset time period (t) or over a preset number (a) of regulating cycles,
c) a further test is carried out as to whether the vehicle speed (V_{F}) is below a limit value (b),
d) if the above-mentioned conditions are fulfilled, the device (5 to 10) for level regulation responds by discharging air from all air suspension bellows (1 to 4),
or by discharging air side-wise from the higher-lying air suspension bellows only,
or by supplying air side-wise to the lower-lying air suspension bellows only,
or by discharging air side-wise from the higher-lying air suspension bellows and at the same time or in alternation supplying air side-wise to the lower-lying air suspension bellows only.

2. Method according to claim 1, **characterized in that** prior to the response of the device (5 to 10) for level regulation, a test is additionally carried out as to whether the vehicle doors (T) are closed.

3. Method according to claim 1, **characterized in that** the electronics unit (10) recognises that the state "sloping roadway" has ended when the device (5 to 10) for level regulation operates in the opposite direction over a preset time period (t) or over a preset number (a) of regulating cycles.

4. Method according to claim 3, **characterized in that** once it has been recognised that the state "sloping roadway" has ended, the normal level regulation function for correcting the driving level is re-established.

## Revendications

1. Procédé pour empêcher le retournement d'un véhicule à suspension pneumatique comportant des soufflets pneumatiques (1 à 4) sur une chaussée inclinée comportant les caractéristiques suivantes :
a) le véhicule est équipé d'un dispositif (5 à 10) pour un réglage de niveau, qui est constitué d'électrovannes (5, 6), de capteurs de déplacement (7, 8, 9) et d'un dispositif électronique (10),
**caractérisé par** les caractéristiques suivantes :
b) l'électronique (10) vérifie si le dispositif (5 à 10) pour le réglage de niveau fonctionne sur un intervalle de temps prédéterminé (t) ou selon un nombre prédéterminé (a) de jeux de réglage dans la même direction,
c) il est également vérifié, si la vitesse du véhicule (V_{F}) tombe en dessous d'une valeur limite (b),
d) au cas où les conditions précitées sont remplies, le dispositif (5 à 10) pour un réglage de niveau réagit à la purge de tous les soufflets pneumatiques (1 à 4),
ou à la purge latérale uniquement des soufflets pneumatiques supérieurs,
ou à la ventilation latérale des soufflets pneumatiques inférieurs,
ou à la purge latérale des soufflets pneumatiques et simultanément ou en alternance à la ventilation latérale uniquement des soufflets pneumatiques inférieurs.

2. Procédé selon la revendication 1, **caractérisé en ce que**, avant la réaction du dispositif (5 à 10) pour le réglage du niveau, il est en plus vérifié si les portes du véhicule (T) sont fermées.

3. Procédé selon la revendication 1, **caractérisé en ce que** le dispositif électronique (10) reconnaît la fin de l'état "chaussée inclinée", lorsque le dispositif (5 à 10) pour le réglage du niveau fonctionne sur un intervalle de temps prédéterminé (t) ou sur un nombre prédéterminé (a) de jeux de réglage dans la direction opposée.

4. Procédé selon la revendication 3, **caractérisé en ce que**, après la reconnaissance de la fin de l'état de "chaussée inclinée", la fonction normale de réglage de niveau pour le réglage du niveau de conduite est de nouveau généré.
